# EUROPÄISCHE PATENTSCHRIFT

(11) **EP 0 671 604 B1**
(45) Veröffentlichungstag und Bekanntmachung des Hinweises auf die Patenterteilung: **10.06.1998**
(21) Anmeldenummer: 95102859.6
(22) Anmeldetag: 01.03.1995
(51) Int. Cl.: G01D 5/12, G01D 5/252, G06K 11/10

(54) **Vorrichtung zur Umwandlung einer mechanischen in eine elektrische Grösse**
Device for transforming a mechanical quantity into an electrical quantity
Dispositif pour la transformation d'une grandeur mécanique en grandeur électrique

(30) Priorität: 10.03.1994 DE 4408050
(43) Veröffentlichungstag der Anmeldung: 13.09.1995
(73) Patentinhaber: DEUTSCHE THOMSON-BRANDT GMBH, 78048 Villingen-Schwenningen (DE)
(72) Erfinder: Pusch, Olaf, D-78048 Villingen-Schwenningen (DE)

(56) Entgegenhaltungen:
- EP-A- 0 325 705
- EP-A- 0 572 935

## Beschreibung

Die Erfindung betrifft eine Vorrichtung zur Umwandlung einer mindestens eindimensionalen mechanischen Auslenkung in eine dieser Auslenkung entsprechende elektrische Größe.

Diese Vorrichtung wurde als zweidimensionaler Positionsmesser, Anzeige- oder Lage-Sollwertgeber für eine Fläche von wenigen Quadratzentimetern konzipiert.

Bekannte Ausführungsformen von Sollwertgeber werden zum Beispiel zu Fernsteuerungszwecken als "Mouse" bzw. "Trackball" in der Computertechnik oder als "Joystick" im Modellbau eingesetzt.
Der prinzipielle Aufbau einer "Mouse" bzw. eines "Trackball" besteht aus zwei ortogonal angeordneten Inkremental-Drehgebern und einem in einer Aufnahmehalterung drehbar gelagerten, gummierten Ball, der an beiden Drehgeberachsen anliegt. Durch Drehung des Balles in eine beliebige Richtung, werden entweder eine oder beide Drehgeberachsen gleichzeitig verändert, so daß dem Winkel der Drehbewegung des Balles eine bestimmte Umdrehungsveränderung des Drehgebers entspricht. Den Impulse liefernden Drehgebern ist gewöhnlich eine signalverarbeitende Stufe zur Auswertung nachgeschaltet.

Ein "Joystick" weist anstelle der Drehgeber zwei Potentiometer auf, die über eine kardanische Umlenkung mit einem Steuerhebel verkoppelt sind. Jeder Position des Steuerhebels ist eine dementsprechende Stellung der Potentiometerschleifer zugeordnet, so daß die an den Potentiometerklemmen abgegriffenen Spannungswerte einer Auswerteschaltung zugeführt werden können.

Es ist bekannt aus EP 0 572 935 Sensoren für Streckenmessungen zu verwenden. Es ist ferner bekannt aus EP 0 325 705 eine Einrichtung zum Ermitteln von Schaltsignalen in Abhängigkeit von der jeweiligen Lage zweier relativ zueinander verstellbaren Bauteile.

Nachteilig bei den oben angeführten Konzepten sind sowohl die relativ hohen Produktionskosten (Material sowie Herstellung) als auch die hohe Energieaufnahme.

Der Erfindung liegt die Aufgabe zugrunde, eine Positionier- und Lagemeßvorrichtung zu entwickeln, die eine kostengünstige Produktionsmöglichkeit und eine äußerst geringe Energieaufnahme (theoretisch keine) bei gleichzeitig ausreichend hoher Auflösung aufweist.

Diese Aufgabe wird gelöst durch eine Vorrichtung nach Anspruch 1. Vorteilhafte Weiterbildungen sind in den abhängigen Patentansprüchen angegeben.

Erfindungsgmäß wird eine Vorrichtung zur Umwandlung einer mindestens eindimensionalen mechanischen Auslenkung in eine dieser Auslenkung entsprechende elektrische Größe vorgeschlagen wobei diese wenigstens zwei Kontaktflächen, zwei auf einem Träger aufgebrachte Schleifer mit je zwei Kontakten, und eine Anzahl von parallel geführten Leiterbahnen aufweist, der Schleifkontaktträger so aufgehängt ist, daß eine Verdrehung des Trägers bezüglich der Leiterbahnen ausgeschlossen ist, eine Bewegung des Trägers in Richtung der Leiterbahnen resultiert in einer elektrischen Verbindung zwischen den wenigstens zwei Kontaktflächen und einer, zwei oder keiner der Leiterbahnen, wobei diese Kontaktstellen der Leiterbahnen sich innerhalb der den Kontaktflächen zugeordneten Flächenabschnitte der Leiterbahnen befinden, eine Ansteuerschaltung mit seinen Ausgangsleitungen mit den Kontaktflächen verbunden ist, eine Auswertschaltung mit den Leiterbahnen verbunden ist, wobei die Auswerteschaltung, eine die Auslenkung entsprechende, elektrische Größe generiert.
Mit dieser Vorrichtung wird vorteilhafterweise das Ansteuersignal theoretisch verlustlos und unbeeinflußt von den Anschlüssen der Kontaktflächen über die Schleifer und über die von den Schleifern kontaktierten Leiterbahnen zu deren Enden weitergeleitet. Ein zusätzlicher, positiver Gesichtspunkt ist die kostengünstige Produktion der Kontaktflächen sowie der Leiterbahnen auf einem Trägermaterial. Die Herstellung kann zum Beispiel auf einer kupferkaschierten Leiterplatte in nur einem Arbeitsgang erfolgen.

Werden die parallel verlaufenden Leiterbahnen auf dem Trägermaterial im rechten Winkel zueinander weitergeführt, so ist es möglich, nicht nur eine Dimension sondern zwei Dimensionen gleichzeitig abzutasten und zu bestimmen.

Eine sinnvolle Erweiterung der Vorrichtung besteht darin, die Anzahl der rechtwinklig zueinander geführten Leiterbahnen den spezifischen Anforderungen entsprechend zu erhöhen.
Der Vorteil liegt darin, daß mit steigender Anzahl von Leiterbahnen in gleichem Maße die Auflösung steigt. Die Grenze der Auflösung liegt eigentlich nur in der Strukturfeinheit der Leiterbahnen, der mechanischen Präzision des Schleifkontaktpaares und/oder in den Ausmaßen der Vorrichtung.

Es empfiehlt sich die Aufbringung zweier weiterer Kontaktflächen zur Unterteilung des Abtastbereiches in insgesamt vier Abschnitte. Desweiteren sollte eine bevorzugte Anordnung der Leiterbahnen derart vorgenommen werden, daß die Leiterbahnen in einem engen 180°- Bogen wieder parallel zu den bereits bestehenden Leiterbahnen zurückgeführt werden.
Der entscheidende Vorteil zweier zusätzlicher Kontaktflächen sowie der Leiterbahnrückführung liegt in der Erkennung des positiven wie auch negativen X-/Y-Bereichs und damit verbunden eine Ansteuerbarkeit einzelner Positionspunkte, die um das 4-fache höher liegt als bei einfacher Leiterbahnführung.

Die Ansteuerung der Kontaktflächen sowie die Auswertung der Auswertesignale, die an dem einen oder dem anderen Ende der Leiterbahnen abgegriffen werden können, kann beispielsweise von einem Mikroprozessor übernommen werden.

Die Erfindung wird im folgenden in einem Ausführungsbeispiel anhand der Figuren näher erläutert. Dabei zeigen
- Figur 1: einen Positionsmesser mit Erkennung des positiven wie negativen X-/Y-Bereichs;
- Figur 2: ein Punktegitter der adressierbaren Positionen je Quadrant;
- Figur 3: ein Flußdiagramm eines Steuerprogramms für einen Positionsmesser;

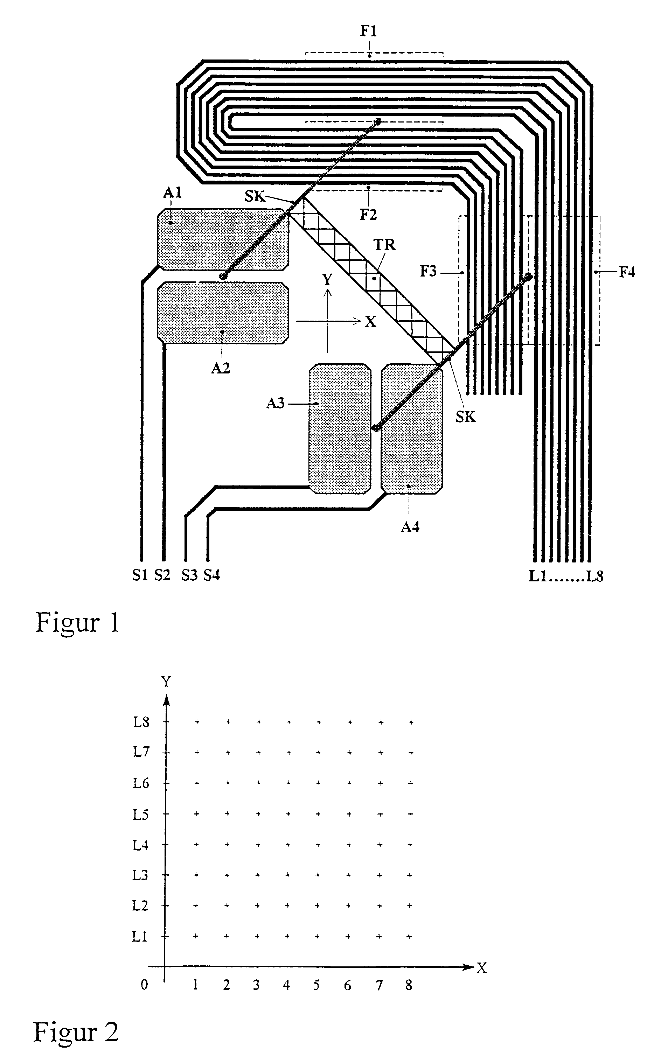

Mit dem in Figur 1 dargestellten Ausführungsbeispiel eines Positionsmessers können zwei Dimensionen und bis zu 17 Stufen aufgelöst werden.

Wie in Figur 2 gezeigt läßt sich in einem kartesischen Koordinatensystem ein Punktegitter mit ganzzahligen Koordinaten darstellen. Insgesamt handelt es sich hierbei um 9 x 9 = 81 Positionen für nur einen Quadranten oder 17 x 17 = 289 Positionen für alle vier Quadranten.

Der Positionsmesser in Figur 1 weist vier rechteckige Kontaktflächen A1 bis A4 sowie acht parallel liegende, mäanderförmig geführte Leiterbahnen L1 bis L8 auf. Zwei auf einem Träger TR aufgebrachte Schleifer SK mit je zwei Kontakten überbrücken dabei zwei der vier Kontaktflächen A1 bis A4 mit einer, zwei oder keiner der Leiterbahnen L1 bis L8, die sich innerhalb der den Kontaktfflächen A1 bis A4 zugeordneten, gestrichelt dargestellten Flächenabschnitte F1 bis F4 auf dem Leiterbahnmäander befinden.

Der Schleifkontaktträger TR sei so aufgehängt, daß er sich sowohl in X- als auch in Y-Richtung parallel verschieben läßt, wobei seine Verdrehung bezüglich der acht Leiterbahnen L1 bis L8 ausgeschlossen sein muß.

Eine Parallelverschiebung des Kontaktträgers in der X-/Y-Ebene stellt eine elektrische Verbindung zwischen zwei der Flächen A1 bis A4 und einer, zwei oder keiner der Leiterbahnen L1 bis L8 im zugeordneten Flächenabschnitt F1 bis F4 her. über die acht Leiterbahnen läßt sich nun die Amplitude der Auslenkung ermitteln. Sollten aufgrund eines zu breiten Schleifkontaktes SK zwei der Leitungen L1 bis L8 überbrückt werden, so wird in diesem Ausführungsbeispiel die höherwertige Leitung ausgewertet. Diese Festlegung ist willkürlich getroffen und kann auch mit der niederwertigeren durchgeführt werden. Genausogut besteht die Möglichkeit die Auswertung entweder mit der Leitung L1 oder mit der Leitung L8 zu beginnen.

Der Positionsmesser läßt sich mit Hilfe eines Prozessors besonders vorteilhaft ansteuern und auswerten. Dazu werden die vier rechteckigen Kontaktflächen A1 bis A4 über je eine Steuerleitung S1 bis S4 an ein Ausgabeport sowie die acht Meßleitungen L1 bis L8 an ein Eingabeport des Mikroprozessors angeschlossen. Im Zeitmultiplexverfahren werden nun die vier Kontaktflächen A1 bis A4 in einer vom Anwender beliebig festlegbaren Reihenfolge einzeln auf logisch Eins gesetzt, worauf am Eingabeport festgestellt wird, ob und welche der Leiterbahnen L1 bis L8 diese logische Eins (High-Pegel) weiterleitet. Dieses Verfahren hat den Vorteil, daß für die Auflösung der Auslenkung in beide Dimensionen inklusive der Vorzeichen dieselben acht Leiterbahnen benutzt werden können. Die jeweiligen drei nicht aktiven Kontaktflächen müssen vom Prozessor allerdings hochohmig geschaltet werden, andernfalls bei einer Auslenkung des Schleifkontaktes SK in Richtung der Winkelhalbierenden (45°) der High-Pegel einer Kontaktfläche über beide Schleifer und eine auf Low-Pegel liegende Kontaktfläche gegen Masse kurzgeschlossen wird.

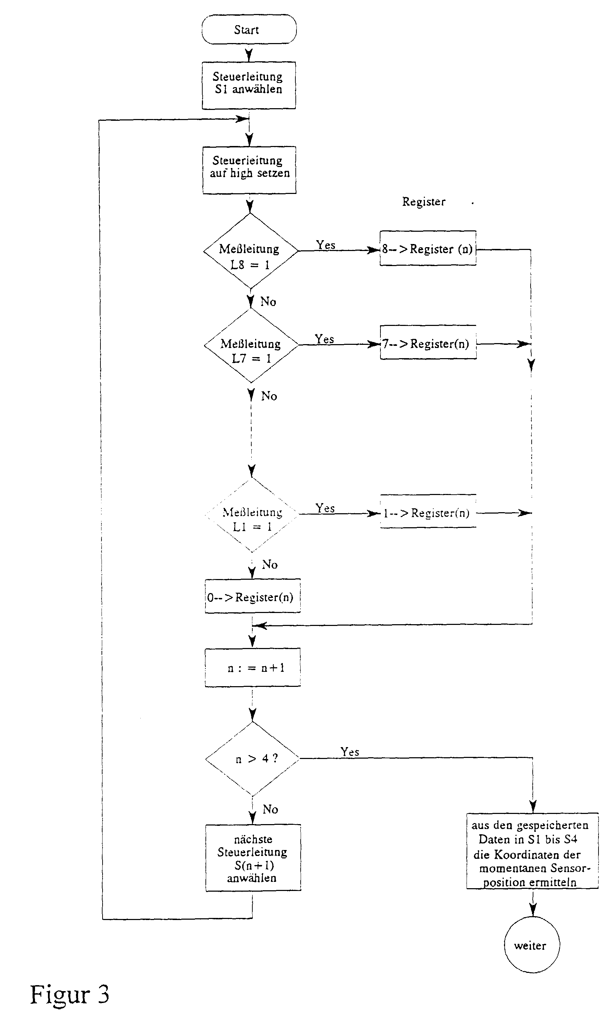

Figur 3 gibt einen überblick über eine Ablaufsteuerung. Die Auswertung durch den Prozessor erfolgt durch serielle Prüfung aller acht Leitungen L1 bis L8 hinsichtlich eines High-Pegels. Jede dieser acht Leitungen, in diesem Ausführungsbeispiel der Ablaufsteuerung beginnend mit L8, bekommt ein Vierbit-Datenwort zugeordnet, welches bei einem High-Pegel der Leitung zusammen mit dem Vorzeichenbit für jede Dimension in einem Register des Prozessors einzeln abgespeichert wird.
Aus den beiden Vierbit-Datenwörtern beider Dimensionen wird nun ohne Berücksichtigung der Vorzeichen ein Achtbitdatenwort zusammengesetzt. Dieses kann entweder direkt ausgewertet oder es kann damit zweckmäßigerweise eine Tabelle in einem ROM des ansteuernden Prozessors adressiert werden. Die Vorzeichenbestimmung erfolgt softwaregesteuert bereits bei der Ansteuerung der Steuerleitungen S1 bis S4, da jedem Kontaktflächenpaar in seiner spezifischen Paarung ein bestimmter Quadrant zugeordnet werden kann.
Soll eine Winkelmessung durchgeführt werden, so beruht diese ebenfalls auf einer softwaremäßig durchgeführten Polarkoordinatentransformation. Dazu wird wiederum eine Tabelle im ROM des ansteuernden Prozessors abgelegt, die nun durch die X- und Y-Koordinaten des Schleifkontaktpaares SK indirekt adressiert wird. In dieser Tabelle kann nun ein jedem Gitterpunkt zugeordneter Winkel mit einer vom Charakter der Tabelle abhängigen Auflösung abgelegt werden. In einer zweiten Tabelle, die über einen Offset auf die ursprüngliche Adresse erreicht wird, kann dazu eine Information über den Betrag eines Geschwindigkeitssvektors abgelegt sein, die neben der Winkelinformation als zusätzliches Datenwort übertragen werden kann. Ist dieser Positionsmesser beispielsweise in einem Infrarot-Fernbedienungsgeber für TV-Geräte eingesetzt, läuft bei Betätigung des Schleifkontakträgers in eine beliebige Richtung und auf einen bestimmten Punkt hin ein angesteuerter Cursor auf einem TV-Bildschirm mit mehr oder minder hoher Geschwindigkeit auf die mit dem Schleifkontaktträger zuvor bestimmte Position und/oder Richtung.
Dieser Positionsmesser, Positionier- und Lage-Sollwertgeber läßt sich für ein breites Anwendungsspektrum in der Steuerungs- und Regelungstechnik einsetzen.

## Patentansprüche

1. Vorrichtung zur Umwandlung einer mindestens eindimensionalen mechanischen Auslenkung in eine dieser Auslenkung entsprechende elektrische Größe **dadurch gekennzeichnet, daß** diese wenigstens zwei Kontaktflächen (A1, A4), zwei auf einem Träger (TR) aufgebrachte Schleifer (SK) mit je zwei Kontakten, und eine Anzahl von parallel geführten Leiterbahnen (L1 - L8) aufweist, der Schleifkontaktträger (TR) so aufgehängt ist, daß eine Verdrehung des Trägers bezüglich der Leiterbahnen ausgeschlossen ist, eine Bewegung des Trägers (TR) in Richtung der Leiterbahnen (X, Y) resultiert in einer elektrischen Verbindung zwischen den wenigstens zwei Kontaktflächen (A1, A4) und einer, zwei oder keiner der Leiterbahnen (L1 - L8), wobei diese Kontaktstellen der Leiterbahnen sich innerhalb der den Kontaktflächen (A1, A4) zugeordneten Flächenabschnitte (F1, F4) der Leiterbahnen befinden, eine Ansteuerschaltung mit seinen Ausgangsleitungen (S1 - S4) mit den Kontaktflächen verbunden (A1, A4) ist, eine Auswertschaltung mit den Leiterbahnen (L1 - L8) verbunden ist, wobei die Auswerteschaltung, eine die Auslenkung entsprechende, elektrische Größe generiert.

2. Vorrichtung nach Anspruch 1 **dadurch gekennzeichnet,** daß für die Auflösung der mechanischen Auslenkung in zwei Dimensionen dieselben Leiterbahnen benutzt werden, wie für die Auslenkung in eine Dimension.

3. Vorrichtung nach einem der Ansprüche 1 bis 2 **dadurch gekennzeichnet**, daß eine Erhöhung oder Verringerung der Anzahl der Leiterbahnen eine dementsprechend hohe oder geringe Auflösung ergibt.

4. Vorrichtung nach einem der Ansprüche 1 bis 3 **dadurch gekennzeichnet**, daß durch Aufbringung von zwei weiteren paarweise angeordneten Kontaktflächen (A2, A3) die Auflösung der mechanischen Auslenkung in zwei Dimensionen sowohl in positiver als auch in negativer Richtung erolgt.

5. Vorrichtung nach einem der Ansprüche 1 bis 4 **dadurch gekennzeichnet**, daß durch Umlenkung um 180° und Rückführung der parallel verlaufenden Leiterbahnen (L1, L8) die Ansteuerbarkeit einzelner Positionspunkte um das Vierfache höher liegt.

6. Vorrichtung nach einem der Ansprüche 1 bis 5 **dadurch gekennzeichnet**, daß
die Ansteuersignale über die kontaktierten Leiterbahnen (L1 bis L8) an deren Ende als Auswertesignale weitergeleitet werden.

7. Vorrichtung nach einem der Ansprüche 1 bis 6 **dadurch gekennzeichnet**, daß die Ansteuerung und die Auswertung der Signale von einem Mikroprozessor vorgenommen wird.

## Claims

1. A device for converting an at least one dimensional mechanical deflection into an electrical variable corresponding to this deflection, characterised in that said device comprises at least two contact surfaces (A1, A4), two slides (SK) arranged on a carrier (TR) and in each case having two contacts, and a number of parallel extending conductor paths (L1 - L8), the sliding contact carrier (TR) is suspended so as to prevent a rotation of the carrier relative to the conductor paths, a movement of the carrier (TR) in the direction of the conductor paths (X, Y) results in an electrical connection between the at least two contact surfaces (A1, A4) and one, two or none of the conductor paths (L1 - L8), said contact points of the conductor paths being situated within the surface sections (F1, F4) of the conductor paths associated with the contact surfaces (A1, A4), a drive circuit is connected by its output lines (S1 - S4) to the contact surfaces (A1, A4) and an analysis circuit is connected to the conductor paths (L1 - L8), which analysis circuit generates an electrical variable corresponding to the deflection.

2. A device according to Claim 1, characterised in that the same conductor paths are used for resolving the mechanical deflection in two dimensions as for the deflection in one dimension.

3. A device according to one of Claims 1 to 2,
characterised in that an increase or reduction in the number of conductor paths results in a correspondingly high or low resolution.

4. A device according to one of Claims 1 to 3,
characterised in that as a result of the provision of two further contact surfaces (A2, A3) arranged in pairs, the resolution of the mechanical deflection in two dimensions takes place both in the positive and the negative direction.

5. A device according to one of Claims 1 to 4,
characterised in that as a result of a 180° reversal and return of the parallel extending conductor paths (L1, L8), the controllability of individual position points is improved four-fold.

6. A device according to one of Claims 1 to 5,
characterised in that the control signals are forwarded via the contacted conductor paths (L1 to L8) at the ends thereof as analysis signals.

7. A device according to one of Claims 1 to 6,
characterised in that the control and analysis of the signals is performed by a microprocessor.

## Revendications

1. Dispositif destiné à la transformation d'une dérivation mécanique d'au moins une dimension en une grandeur électrique correspondant à cette dérivation caractérisé en ce qu'il présente au moins deux surfaces de contact (A1, A4), deux glisseurs (SK) placés sur un support (TR), chacun munis de deux contacts, et un nombre déterminé de circuits conducteurs parallèles (L1 - L8). Le support de curseur (TR) est suspendu de sorte qu'une torsion de ce support par rapport aux circuits conducteurs est exclue. Un mouvement du support (TR) en direction des circuits conducteurs (X, Y) provoque une connexion électrique entre au moins deux surfaces de contact (A1, A4) et l'un, les deux ou aucun des circuits conducteurs (L1 - L8), où ces points de contact des circuits conducteurs se trouvent à l'intérieur des segments de surface (F1, F4) des circuits conducteurs attribués aux surfaces de contact (A1, A4). Le dispositif comporte également un circuit de commande muni de lignes de sortie (S1 - S4) reliées aux surfaces de contact (A1, A4), un circuit d'évaluation connecté aux circuits conducteurs (L1 - L8), où le circuit d'évaluation génère une grandeur électrique correspondant à la dérivation.

2. Dispositif d'après la revendication 1 caractérisé en ce que les mêmes circuits conducteurs sont utilisés pour la résolution de la dérivation mécanique en deux dimensions, tout comme pour la résolution en une dimension.

3. Dispositif d'après l'une des revendications 1 à 2 caractérisé en ce qu'une augmentation ou une diminution du nombre de circuits conducteurs donne une résolution correspondante.

4. Dispositif d'après l'une des revendications 1 à 3 caractérisé en ce que, grâce à l'application de deux autres surfaces de contact (A2, A3) disposées sous forme de paires, la résolution de la dérivation mécanique en deux dimensions s'effectue dans une direction aussi bien positive que négative.

5. Dispositif d'après l'une des revendications 1 à 4 caractérisé en ce que, en raison d'un arc de 180° et de la courbure de circuits conducteurs parallèles (L1, L8) les possibilités de commande des points de positionnement sont multipliées par quatre.

6. Dispositif d'après l'une des revendications 1 à 5 caractérisé en ce que les signaux de commande sont transmis par l'intermédiaire de circuits conducteurs en contact (L1 à L8) jusqu'à leur extrémité sous forme de signaux d'évaluation.

7. Dispositif d'après l'une des revendications 1 à 6 caractérisé en ce que la commande et l'évaluation des signaux sont effectuées par un microprocesseur.
